# DEMANDE DE BREVET EUROPEEN

(11) **EP 0 805 314 A1**
(43) Date de publication de la demande: **05.11.1997**
(21) Numéro de dépôt: 96400951.8
(22) Date de dépôt: 03.05.1996
(51) Int. Cl.: F24F 13/14, F16K 1/22, A62C 2/12

(54) **Obturateur de clapet, clapet muni d'un obturateur et système d'un cadre à sceller à travers une paroi et d'un clapet muni d'un obturateur à monter dans ce cadre**

(71) Demandeur: ANEMOTHERM, 92170 Vanves (FR)
(72) Inventeur: Roux, Patrick Pierre Roger Lucien, 89116 Precy sur Vrin (FR)
(74) Mandataire: Thinat, Michel

(57) **Abrégé**

La présente invention concerne un système d'un cadre à sceller et d'un clapet.

Le cadre (2) du système de l'invention est pourvu à l'une de ses extrémités d'une collerette (4) servant de butée d'arrêt sur une face d'une paroi à travers laquelle le cadre doit être scellé et sur sa face latérale externe d'une pluralité de pattes de scellement, la face interne du cadre étant espacée de la face externe du clapet (1) par un intervalle destiné à être rempli d'un liant en matériau réfractaire.

L'invention s'applique notamment à des installations de ventilation ou de conditionnement d'air.

## Description

La présente invention concerne un obturateur de clapet, un clapet muni d'un obturateur, et un système d'un cadre à sceller à travers une paroi, telle une maçonnerie, et d'un clapet muni d'un obturateur à monter dans ce cadre, ce système servant à raccorder deux gaines d'un réseau de conduites de désenfumage, de soufflage d'air neuf ou d'extraction d'air vicié, par exemple pour une installation de ventilation ou de conditionnement d'air dans un bâtiment.

On connaît déjà des volets notamment de désenfumage à portillon ou à guillotine venant s'adapter sur des bouches d'air grillagées, constitués d'un manchon en matériau réfractaire dans lequel pivote un obturateur également en matériau réfractaire, la face latérale externe de ce manchon étant collée dans une ouverture traversant une paroi et munie préalablement d'un cadre scellé dans ladite ouverture, le cadre étant pourvu d'une collerette périphérique d'appui sur une face de la paroi et d'une pluralité de pattes de scellement.

Toutefois, ces volets ne sont pas adaptés au raccordement de deux gaines d'un réseau de conditionnement d'air et leur utilisation est limitée à la fonction de désenfumage.

On connaît actuellement différentes catégories de clapets pouvant être intercalés sur une gaine, selon la fonction qu'ils remplissent.

Une première catégorie est constituée des clapets de désenfumage qui sont montés sur un réseau de canalisations dit de désenfumage traversant ou desservant plusieurs locaux et restent fermés en position de fonctionnement normale. Lorsqu'un incendie se déclare dans un local, le clapet de désenfumage de ce local s'ouvre pour évacuer dans le réseau les fumées et gaz chauds produits par l'incendie, mais les autres clapets de désenfumage desservant d'autres locaux et qui ne sont donc pas exposés directement à l'incendie, restent fermés pour assurer le compartimentage entre la zone sinistrée et les zones non sinistrées et empêcher ainsi ces fumées de se répandre dans les autres locaux.

Une deuxième catégorie est constituée de clapets coupe-feu qui sont montés généralement sur le réseau aéraulique, de soufflage d'air neuf ou d'extraction d'air vicié, et sont maintenus ouverts en position de fonctionnement normale.

Lorsqu'un incendie se déclare dans un local, le clapet coupe-feu de ce local passe en position fermée pour éviter d'alimenter l'incendie en oxygène et pour empêcher les remontées de flamme par appel d'air dans le réseau d'extraction d'air en réalisant ainsi un compartimentage.

Toutefois, contrairement aux clapets de désenfumage, les clapets coupe-feu peuvent être soumis à des températures très élevées en cas d'incendie, ce qui a pour conséquence que les clapets coupe-feu doivent être à la fois thermiquement résistants et isolants pour éviter respectivement leur destruction et la conduction thermique du côté exposé au feu vers le côté non exposé de la paroi.

Pour ces raisons, les clapets coupe-feu ne sont pas montés à travers la paroi par l'intermédiaire d'un cadre à sceller car la conduction thermique élevée des aciers du cadre à sceller pourrait propager l'incendie vers d'autres locaux.

Les clapets coupe-feu sont donc actuellement montés directement dans l'ouverture pratiquée à travers la paroi et y sont scellés totalement en cours de fin de chantier (pose de matériel de second oeuvre) par maçonnage notamment, en remplissant au mortier l'espace entre l'ouverture et le corps du clapet avec nécessité de créer des réservations (trous d'insertion) dans la maçonnerie avec tous les risques d'erreurs de positionnement, dimensionnelles et d'acces- sibilité.

Ceci a pour inconvénients que le clapet est positionné dans le mur avec une précision médiocre du fait du repérage difficile du clapet par rapport à un trou béant dans la maçonnerie et que le clapet est fixé de manière inamovible dans la maçonnerie, ce qui nécessite la destruction de celle-ci en cas de remplacement du clapet, et peut même endommager ce dernier.

Une troisième catégorie de dispositifs consiste en des appareils complémentaires de régulation du débit d'air, tels que des registres de dosage, des boîtes de détente ou des boîtes de débit variable assurant la gestion automatique des flux d'air du réseau aéraulique.

Enfin, les clapets coupe-feu connus induisent des nuisances sonores engendrées par l'écoulement des flux.

Par ailleurs, les organes obturateurs mobiles des clapets coupe-feu connus sont du type à papillon comportant deux tourillons opposés coaxialement alignés à chape de pivotement et sont composés de matériaux réfractaires minéraux ou non réfractaires mais incombustibles (par exemple métalliques) et notamment à structure en sandwich comprenant deux couches de matière réfractaire séparées par une armature intermédiaire de renfort telle qu'un disque métallique formant âme intercalaire sur lequel les tourillons sont montés en chape pour transmettre la force d'entraînement rotatif. Cette structure connue d'obturateur présente les inconvénients d'une part d'un poids prohibitif en raison notamment d'une épaisseur notable imposée pour l'obtention d'une résistance mécanique suffisante et d'autre part d'une dissipation de chaleur par transfert thermique aléatoire et désordonné provoquant notamment une déformation par gauchissement ou gaufrage ondulateur de l'armature.

En général, un réseau de ventilation pour le conditionnement d'air est équipé de ces trois différentes catégories de dispositifs, ce qui rend le montage de l'ensemble long, compliqué et coûteux.

La présente invention a donc pour but d'éliminer les inconvénients précités de l'état antérieur de la technique et de proposer un système d'un cadre à sceller et d'un clapet qui soit de montage facile et précis, et assure une excellente isolation thermique tout en rationnalisant et en rendant reproductibles, par un ouvrier non qualifié, les opérations de pose du clapet dans un cadre spécialement conçu à cet effet et préalablement scellé pendant l'exécution du gros oeuvre dans la construction du bâtiment d'où possibilité de récupérer ultérieurement le clapet (par démontage ou destruction des joints de liaison) pour réutilisation éventuelle en un autre emplacement lui-même préalablement pourvu d'un cadre à sceller conforme à l'invention.

L'invention a également pour but de proposer un clapet qui puisse être utilisé indifféremment pour le désenfumage ou le coupe-feu et qui puisse en outre assurer d'autres fonctions en particulier la fonction de régulation du débit d'air dans le réseau.

A cet effet, la présente invention a pour objet un système d'un cadre à sceller à travers une paroi et d'un clapet muni d'un obturateur à monter dans ledit cadre, caractérisé en ce que le cadre est pourvu à l'une de ses extrémités d'une collerette servant de butée d'arrêt et d'appui sur une face de la paroi et sur sa face latérale externe d'une pluralité de pattes de scellement, en ce que la face latérale interne du cadre est espacée de la face latérale externe du clapet par un intervalle annulaire destiné à être rempli d'un liant en matériau réfractaire et de préférence thermiquement isolant et en ce que le clapet assure la fonction de compartimentage à effet coupe-feu et de désenfumage.

Le liant en matériau réfractaire est par exemple une couche de colle à base de silicate de calcium réfractaire ou un jointoiement en mortier ou béton, assurant l'isolation thermique entre le cadre à sceller et le clapet notamment coupe-feu.

Selon une caractéristique particulière de l'invention, deux capots font saillie de la paroi latérale externe du cadre à partir de deux côtés opposés de celui-ci, pour recouvrir d'une part un bout d'arbre de pivotement extérieurement saillant de l'obturateur du clapet et, d'autre part, un mécanisme de commande relié extérieurement à l'autre bout d'arbre de pivotement de l'obturateur.

Selon une autre caractéristique de l'invention, les pattes de scellement sont sensiblement tangentes au moins initialement à la face externe du cadre et en forme de fourche dont les branches sont bifurcables dans des sens opposés.

L'invention vise également une structure particulière de clapet dont le corps est constitué de deux éléments tubulaires coaxialement alignés, séparés par un écartement prédéterminé, les extrémités proximales de ces éléments étant reliées extérieurement en recouvrement partiel par une ceinture de raccordement qui comporte, au voisinage de chacune de ses deux extrémités opposées, une nervure creuse périphérique percée d'une pluralité d'ouvertures régulièrement espacées, chaque nervure faisant saillie vers l'intérieur de la ceinture et venant en contact avec l'extrémité proximale de l'un des deux éléments tubulaires précités, une garniture en matière thermiquement isolante et de préférence réfractaire venant remplir l'espace intercalaire périphérique délimité entre, d'une part, les deux nervures et, d'autre part, la face interne de la ceinture de raccordement et les extrémités proximales des deux éléments tubulaires.

Selon encore une autre caractéristique de l'invention, au moins une rangée périphérique de perforations de préférence identiques régulièrement espacées est prévue sensiblement au centre de la ceinture de raccordement et au droit de la garniture précitée.

On peut également prévoir qu'une rangée au moins de perforations régulièrement espacées est pratiquée périphériquement au voisinage de l'extrémité proximale de l'un des deux éléments tubulaires et au droit de la garniture précitée.

Selon une autre caractéristique de l'invention, un joint annulaire en matériau thermiquement isolant et intumescent recouvre intérieurement la ou les rangées de perforations de l'élément tubulaire associé.

Les perforations précitées peuvent être pratiquées suivant plusieurs rangées parallèles axialement espacées par exemple uniformément, les perforations étant décalées de façon alternée d'une rangée à l'autre.

L'invention vise en outre un obturateur de clapet, en forme par exemple de volet-papillon à structure à déformation thermique directionnelle contrôlée, constitué de deux couches de matériaux réfractaires séparées par une plaque plane intermédiaire de renfort formant âme métallique sur laquelle sont montés en chape deux tourillons coaxialement alignés d'extrémité de pivotement de l'obturateur, caractérisé en ce que la plaque intermédiaire est percée de lumières rectangulaires ou oblongues réparties, de préférence régulièrement, le long de plusieurs circonférences concentriques de façon que le rapport de surface pleine et vide reste constant sur toute la surface de l'obturateur, quelle que soit sa taille et d'une conférence à l'autre.

Par exemple, l'orientation, la répartition ou les positions relatives et les dimensions individuelles des lumières sont conformes à la figure 10 des dessins annexés et déterminées de façon ordonnée en fonction de la taille de l'obturateur donc de la masse métallique de ladite plaque intercalaire pour obtenir une dilatation thermique dirigée et contenue de cette armature radialement isotrope.

Les deux couches de matières réfractaires peuvent être en matières réfractaires identiques ou différentes et constituées par exemple de ciment fibré armé de fibres de préférence naturelles, de silicates de calcium, de plâtres, de dérivés de plâtre, de plâtres fibrés ou de sels anhydrides.

Les épaisseurs respectives de la plaque métallique intermédiaire et des couches de matière réfractaire sont déterminées en fonction des qualités de résistance au feu désirées telles que définies dans les réglements officiels existants.

Selon encore une autre caractéristique de l'invention, la plaque précitée est percée de plusieurs trous ronds uniformément espacés pour le passage d'agrafes servant à assembler les deux couches en matériaux réfractaires avec la plaque intermédiaire, ces trous et les lumières précités étant noyés dans une colle à base de produits réfractaires.

La plaque métallique intermédiaire grâce à la configuration de ses perforations et au jeu suffisant entre agrafes et trous de passage d'agrafe, se dilatera uniformément, sous l'action d'un échauffement, dans toutes les directions en restant sensiblement plane sans contrainte de bridage, ce qui provoquera un contact serré périphérique avec le joint en matériau thermiquement isolant et intumescent précité par pénétration dans celui-ci donc un blocage direct de l'obturateur dans sa position fermée.

Tout débit de fuite de gaz chaud lors d'un incendie, à travers le clapet vers le côté froid de l'obturateur en position fermée, sera donc évité grâce à cette étanchéité améliorée.

Deux évidements coaxiaux et coplanaires peuvent être également pratiqués à partir de deux côtés opposés de l'armature pour recevoir les deux tourillons précités.

L'invention a également pour objet un clapet coupe-feu ou de désenfumage à fonction de compartimentage par obturateur à action par tout ou rien, caractérisé en ce qu'il est combinable avec le maintien de l'obturateur dans une position d'ouverture partielle fixe ou variable par régulation automatique pour assurer un coefficient de perte de charge, donc d'énergie massique, constant au moins partiellement pour une situation locale donnée.

Selon un mode de réalisation particulier de l'invention, l'obturateur précité est solidaire en rotation d'un levier d'actionnement qui est soumis à une force de rappel élastique vers la position d'ouverture maximale ou de fermeture de l'obturateur, selon que le clapet est utilisé pour le désenfumage ou comme coupe-feu, et qui est retenu en position de fonctionnement normale par une butée d'arrêt escamotable sous l'action d'un déclencheur, la position angulaire relative de l'obturateur par rapport au levier d'actionnement qui reste retenu dans sa butée d'arrêt étant variable par réglage sélectif pour déplacer l'obturateur vers une position d'ouverture partielle déterminée.

En variante, on peut prévoir que l'obturateur soit sélectivement réglable vers une position d'ouverture partielle déterminée par déplacement angulaire de la butée d'arrêt entraînant l'ensemble du levier et de l'obturateur.

Selon un autre mode de réalisation de l'invention, l'obturateur précité est soumis à une force de rappel élastique vers sa position d'ouverture maximale ou de fermeture et entraîné en rotation par un moteur qui est débrayable sous l'action d'un déclencheur et qui est actionné automatiquement par un régulateur de débit en fonction du débit de fluide mesuré par un capteur dans le clapet.

L'invention sera mieux comprise et d'autres buts, caractéristiques, détails et avantages de celle-ci apparaîtront plus clairement au cours de la description explicative qui va suivre de plusieurs modes de réalisation particuliers actuellement préférés de l'invention, donnés uniquement à titre d'exemple illustratif et non limitatif, en référence aux dessins schématiques annexés, dans lesquels :
La figure 1 est une vue schématique et en perspective du système de l'invention.
La figure 2 est une vue isolée en perspective du cadre à sceller du système de la figure 1.
La figure 2A est une vue partielle et en perspective d'une variante de réalisation du cadre de la figure 2.
La figure 3 est une vue en coupe partielle d'une paroi à travers laquelle sont montés deux systèmes conformes à l'invention, respectivement suivant deux positions de montage opposées.
La figure 4 est une vue de côté du clapet seul du système de la figure 1.
La figure 5 est une vue partielle et en coupe longitudinale suivant la ligne V-V de la figure 4.
La figure 6 est une vue partielle et en perspective du boîtier de commande du clapet, sans son couvercle de protection.
La figure 7 est une vue développée en plan de l'un des éléments tubulaires du corps de clapet.
La figure 8 est une vue partielle de face de l'obturateur du clapet.
La figure 9 est une vue de côté et suivant la flèche IX de l'obturateur de la figure 8.
La figure 10 est une vue isolée de face de l'armature intermédiaire de l'obturateur de la figure 9.
Les figures 11A et 11B sont des schémas synoptiques fonctionnels représentant un clapet coupe-feu de l'invention respectivement dans sa position d'ouverture maximale et dans sa position de fermeture.
La figure 12 est un schéma synoptique fonctionnel représentant un clapet coupe-feu de l'invention à position d'ouverture partielle fixe et sélectivement réglable.
La figure 13 est un schéma synoptique fonctionnel représentant un clapet coupe-feu de l'invention à position d'ouverture variable et automatiquement réglable.
La figure 14 représente une vue fragmentaire en perspective du dispositif de déclenchement du mécanisme de commande d'obturateur suivant la flèche XIV de la figure 6.

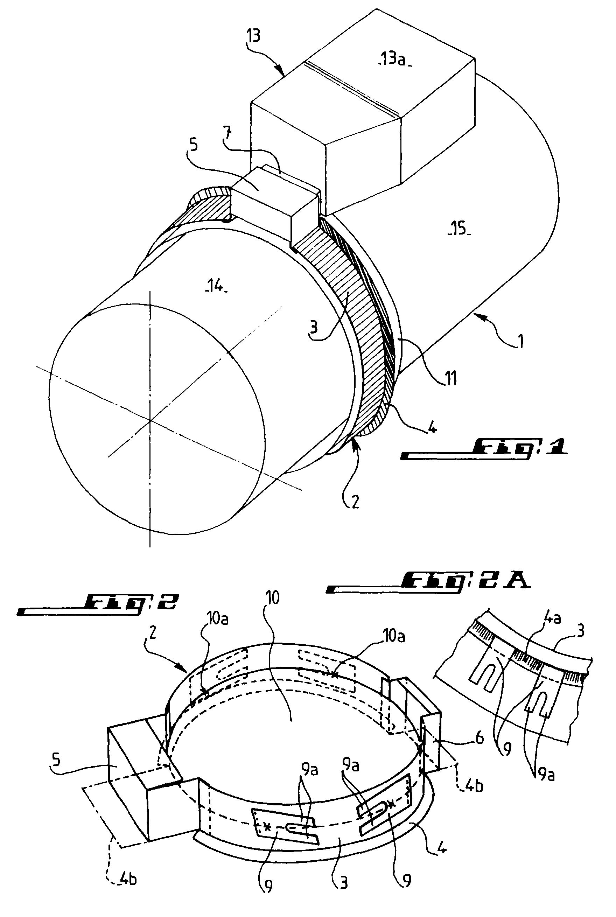

Suivant l'exemple de réalisation représenté sur la figure 1, le système de l'invention comporte un clapet 1 monté à travers un cadre à sceller 2.

Bien que le clapet 1 et le cadre 2 soient représenté ici sous une forme cylindrique circulaire, ils peuvent être de forme en particulier cylindrique ou prismatique quelconque, par exemple de forme cylindrique non ronde telle qu'elliptique ou ovale ou à section transversale droite polygonale.

Le cadre 2 peut être constitué par exemple d'une virole métallique cylindrique 3, par exemple en tôle d'acier galvanisé pour la protection contre la corrosion.

La virole 3 est pourvue à l'une de ses extrémités d'un rebord annulaire radialement saillant vers l'extérieur formant collerette ou bride plane 4 perpendiculaire à l'axe de la virole.

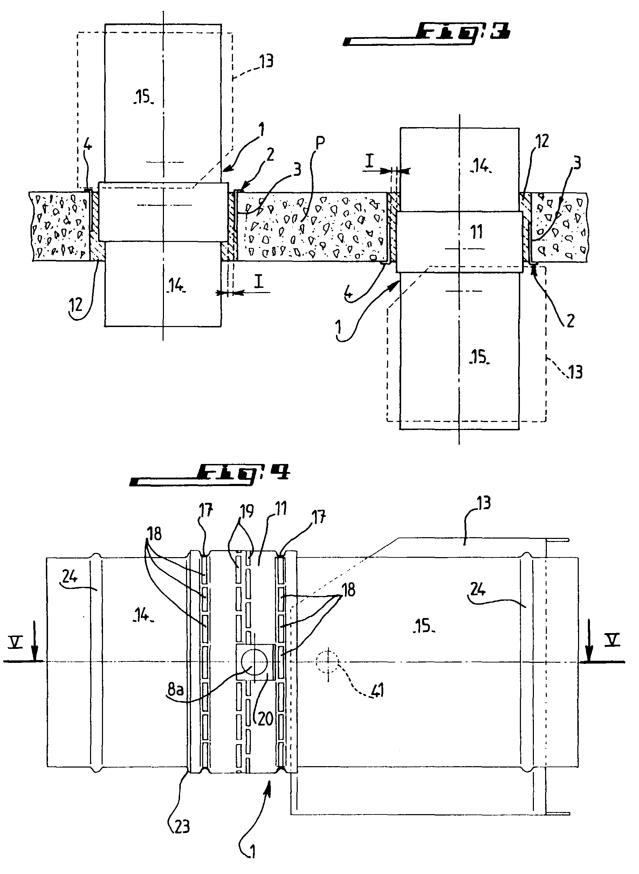

Sur la figure 2A, on a représenté une variante du cadre dans laquelle une moulure 4a vient remplacer ou se combiner avec la collerette 4, cette moulure 4a étant radialement saillante vers l'extérieur, périphérique et située au voisinage d'une extrémité ou non.

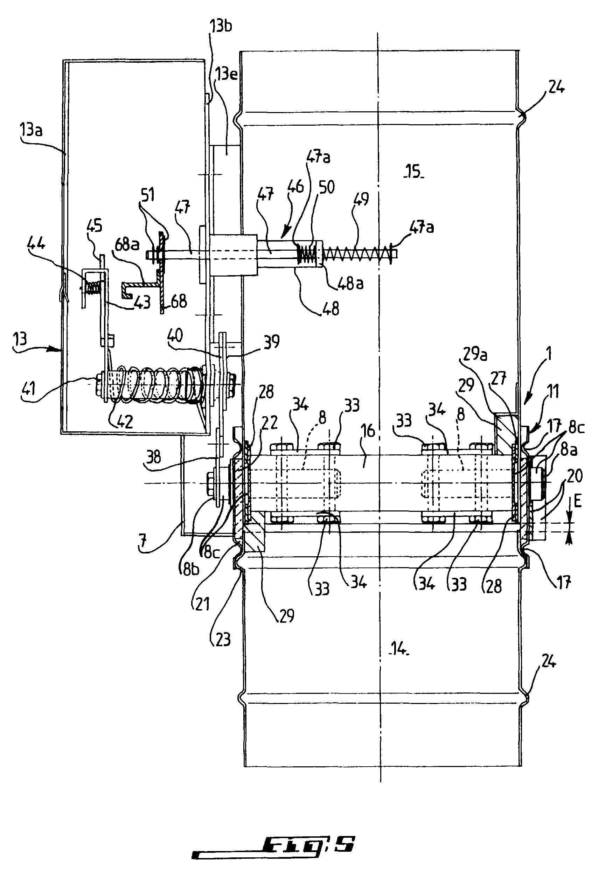

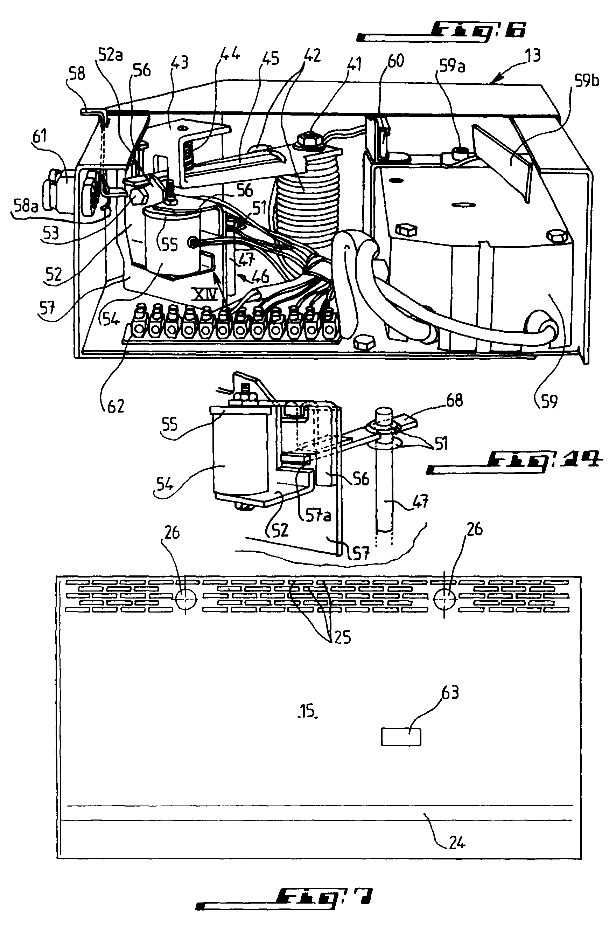

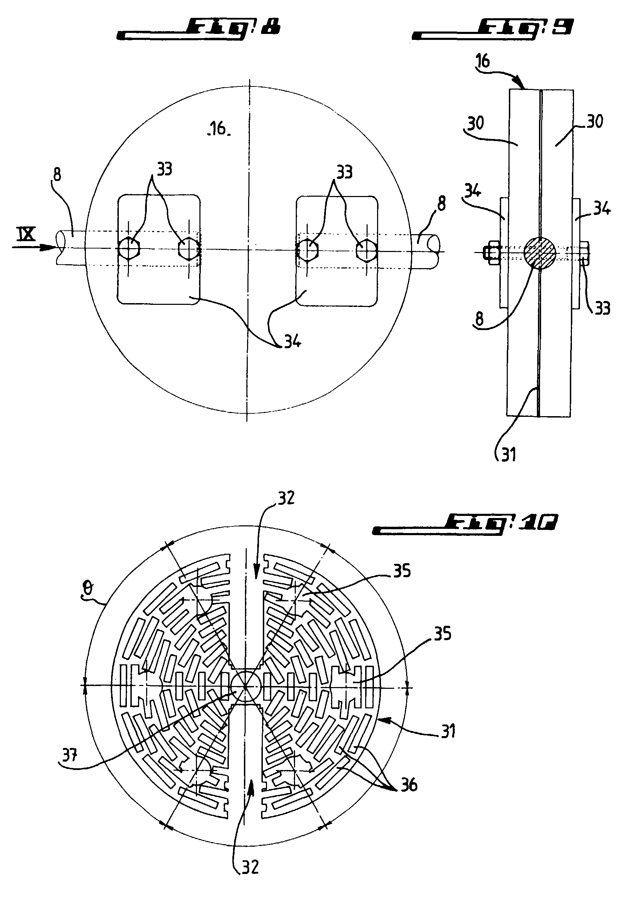

Deux capots métalliques par exemple en forme de parallélépipède incomplet 5 et 6 font radialement saillie de la paroi latérale externe de la virole 3 en deux emplacements diamétralement opposés de préférence au droit respectivement de deux interruptions de la paroi cylindrique de longueurs périphériques correspondant sensiblement à celles des capots reliant ainsi en pont les deux segments de paroi cylindriques ainsi formés et sont destinés à recouvrir respectivement un cache de protection de mécanisme 7 et l'extrémité extérieurement saillante 8a d'un tourillon 8 d'obturateur de clapet (voir figure 5). Ces capots sont ouverts à leur base adjacente à la bride 4 et au moins partiellement fermés du côté oppose.

On peut prévoir des pattes d'extrémité 4b radialement saillantes vers l'extérieur à partir des capots 5 et 6 précités pour servir de butée d'arrêt et d'appui.

Une pluralité de pattes de scellement 9 peut être prévue sur la face cylindrique latérale externe de la virole 3, en étant sensiblement tangentes à celle-ci et en forme de fourche dont les branches 9a sont bifurcables en sens opposés, et dont chaque patte peut éventuellement être courbée vers l'extérieur par exemple par une simple déformation manuelle. Il peut ainsi y avoir deux paires de pattes identiques disposées symétriquement par rapport à l'axe longitudinal médian du cadre 2.

Les pattes 9 de forme généralement rectangulaires peuvent être disposées parallèlement ou perpendiculairement à l'axe longitudinal du cadre.

Une armature provisoire 10 en forme de disque plein ou annulaire est amoviblement fixée provisoirement à l'intérieur de la virole 3 notamment par épinglage par exemple par quelques points de soudure frangibles 10a afin de servir d'âme de raidissement de forme conjuguée de la forme intérieure du cadre et empêchant la déformation du cadre 2 lors de son insertion et de son scellement dans une paroi P (voir figure 3).

On voit sur la figure 3 que le cadre 2 est scellé dans un trou ménagé à travers la paroi en maçonnerie P, mais ne s'étend que partiellement dans ce trou sans le traverser entièrement.

En effet, la longueur axiale du cadre 2 est sensiblement égale à celle de la ceinture de raccordement 11 du clapet 1 et peut éventuellement être inférieure à celle de la paroi à traverser.

La collerette 4 prend appui sur une face de la maçonnerie P et assure un positionnement précis du clapet 1 à travers la paroi P.

On voit clairement sur la figure 3 que le diamètre interne du cadre 2 est supérieur au diamètre externe de la ceinture de raccordement 11 du clapet 1 se montant à ajustement libre guidé dans le cadre pour ménager entre eux un intervalle I qui est rempli d'un liant en matériau réfractaire 12 assurant d'une part la fixation du clapet au cadre et d'autre part l'isolation thermique entre le cadre 2 et la ceinture de raccordement 11.

Le trou qui est percé dans la paroi P a un diamètre correspondant sensiblement au diamètre de la circonférence circonscrite aux capots ou aux extrémités libres des différentes pattes de scellement 9 dans leur position déformée de scellement et l'espace intercalaire entre la virole 3 et le trou est rempli d'un jointoiement réfractaire, par exemple en mortier ou béton.

On a représenté en traits interrompus sur la figure 3 le boîtier externe de commande 13 du clapet 1 monté dans le cadre 2 de préférence de façon que ce boîtier soit situé du côté de la collerette 4 du cadre.

Les capots 5 et 6 sont noyés dans le jointoiement réfractaire précité et protègent ainsi le mécanisme de commande du clapet 1 contre les risques de fluage de la maçonnerie de liaison lors de son durcissement.

En se reportant plus particulièrement à la figure 4, on voit que le corps du clapet 1 est constitué de deux éléments rectilignes tubulaires 14, 15 par exemple de longueurs inégales respectivement court et long, de préférence de même diamètre, séparés par un écartement prédéterminé E en direction axiale (voir figure 5) et dont les extrémités proximales sont reliées extérieurement en recouvrement par la ceinture de raccordement 11 précitée constituée par une virole ici généralement cylindrique. A l'élément tubulaire long 15 est fixée extérieurement la platine formant fond du boîtier 13 sur laquelle est monté l'ensemble du mécanisme de commande de l'obturateur de clapet.

La ceinture de raccordement 11 de longueur axiale définie comporte deux trous diamétralement opposés pour le passage respectif des paliers des bouts d'extrémité 8a des deux tourillons de pivotement 8 respectivement solidaires d'un obturateur 16 logé à l'intérieur du clapet 1.

Deux moulures creuses périphériques 17 font nervure en saillie vers l'intérieur de la ceinture de raccordement 11 respectivement au voisinage de ses deux extrémités axiales opposées de telle sorte que les nervures 17 viennent en contact respectivement avec l'une des extrémités proximales des éléments 14 et 15.

Les nervures creuses 17 sont percées d'une pluralité déterminée d'orifices rectangulaires uniformément espacés 18 suivant une rangée périphérique pour réduire et interrompre localement la conduction thermique entre chaque élément tubulaire 14 ou 15 et la ceinture de raccordement 11.

Le diamètre interne des nervures creuses 17 est sensiblement égal au diamètre externe des éléments tubulaires 14 et 15 afin d'assurer un ajustement mécanique approprié entre eux.

La ceinture de raccordement 11 comporte en outre, sensiblement dans sa partie médiane, par exemple deux rangées circulaires parallèles, axialement espacées et relativement proches de perforations 19 régulièrement espacées et de préférence uniformément décalées de façon alternée d'une rangée à l'autre.

Les perforations 19 notamment rectangulaires identiques contribuent également à interrompre localement la conduction thermique entre les deux éléments tubulaires 14 et 15.

Lors du montage du clapet 1 dans le cadre associé 2, le liant en matériau réfractaire 12 vient combler les espaces vides formés par les ouvertures 18 et les perforations 19, ce qui assure l'étanchéité au fluide du clapet 1.

On voit sur les figures 4 et 5 qu'une équerre 20 est extérieurement rapportée localement par soudage par une aile sur la ceinture de raccordement 11 en étant traversée par l'extrémité saillante 8a du tourillon 8 opposé au tourillon relié au mécanisme de commande, l'autre aile, radialement saillante vers l'extérieur et perpendiculaire à l'axe longitudinal du clapet, servant de cale de positionnement et de butée d'arrêt contre le bord correspondant du capot 6 du cadre 2 tandis que le cache de protection 7 (figure 1) est pourvu, sur chacune de ses deux faces latérales opposées, d'une patte saillante servant de butée d'arrêt contre le bord correspondant du capot 5.

On voit sur la figure 5 que les deux nervures périphériques 17 délimitent entre la face interne de la ceinture de raccordement 11 et les extrémités proximales des deux éléments tubulaires 14 et 15, un espace intermédiaire annulaire 21 dans lequel est logé une garniture de remplissage en matière thermiquement isolante telle qu'une fibre céramique 22 comprimée ou équivalente formant couvre-joint pour l'intervalle d'écartement E.

L'élément tubulaire 14 le plus court comporte au voisinage de son extrémité proximale une moulure périphérique formant nervure de raidissement 23 radialement saillante vers l'extérieur, contre laquelle vient buter l'une des nervures internes 17 de la ceinture de raccordement 11 dont le rebord libre extrême vient recouvrir la nervure 23.

La nervure 23 est fixée, par exemple par soudage par points, à ce rebord d'extrémité de la ceinture de raccordement 11, alors que le rebord à l'extrémité opposée de celle-ci reste radialement écarté de la surface latérale externe de l'élément tubulaire 15 le plus long.

Une autre telle nervure périphérique notamment identique 24 est prévue au voisinage de l'extrémité distale de chacun des éléments 14 et 15 et destinée à servir de butée d'arrêt au tronçon de gaine voisin venant s'emboîter sur cette extrémité d'élément tubulaire pour raccordement à celui-ci.

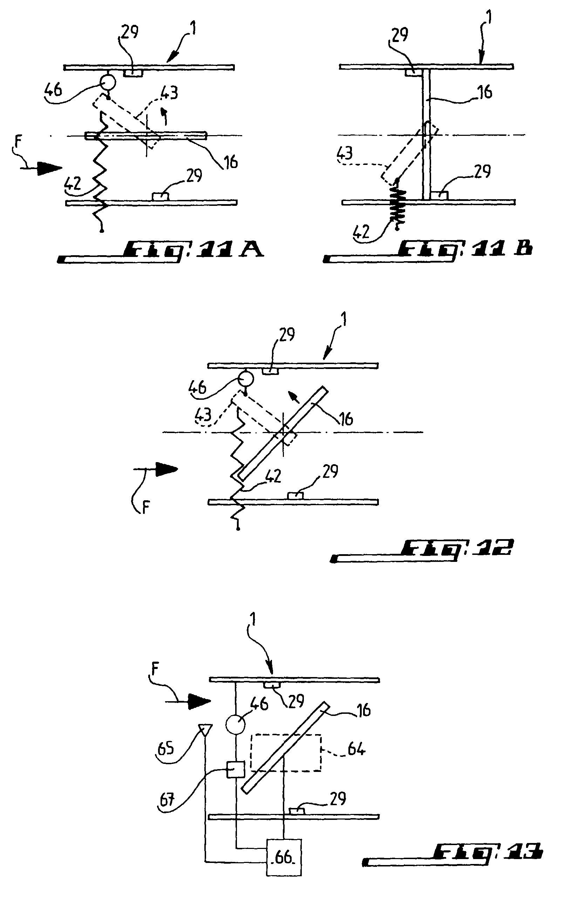

L'élément 15 est représenté sur la figure 7 sous une forme développée en plan et comporte à son extrémité proximale plusieurs rangées périphériques parallèles, en particulier cinq, de perforations 25 régulièrement espacées et décalées de façon alternée d'une rangée à l'autre, ainsi que deux trous 26 diamétralement opposés et coaxialement alignés pour le passage respectif des tourillons 8 reçus chacun dans un coussinet lisse de palier 8c par une bague ou buselure notamment en bronze traversant le corps de clapet et en appui par une embase contre la face interne de la paroi latérale de l'élément tubulaire long 15 en étant fixé audit corps par exemple par un anneau élastique fendu d'arrêt externe du genre circlips.

Les perforations 25 sont disposées au droit de la garniture de remplissage 22 et servent à la fois à interrompre localement la conduction thermique, à dissiper une partie de la chaleur dans la paroi et à protéger cette garniture contre un échauffement excessif.

En revenant à la figure 5, on voit qu'un joint annulaire en matériau thermiquement isolant et intumescent 27 recouvre la paroi latérale interne de l'élément long 15 au droit de l'obturateur 16 en forme de disque en étant traversé par les tourillons 8 et leur embase de palier 8c.

Ce joint annulaire 27 est lui-même recouvert localement, au droit de chacun des tourillons 8, par une rondelle formant joint notamment en céramique 28 interposée entre l'embase de palier et l'obturateur.

Deux joints d'étanchéité aérauliques semi-annulaires 29 en matière mousse souple auto-extingible sont fixés à la paroi latérale interne du corps de clapet, par exemple par collage et éventuellement par une patte centrale de retenue 29a, de part et d'autre du disque obturateur 16 et symétriquement par rapport au centre de celui-ci, de façon que ce dernier prenne simultanément appui contre eux en position fermée respectivement par ses faces opposées.

Les joints aérauliques 29 servent également de butée de fin de course angulaire pour l'obturateur 16 en position de fermeture.

On va maintenant décrire la structure de l'organe obturateur 16 en référence aux figures 8 à 10.

L'obturateur 16 ici de forme circulaire présente une structure de type sandwich composée de deux couches en matériau réfractaire 30 séparées par une armature intermédiaire de renfort 31 telle qu'un disque métallique formant âme.

L'armature intermédiaire 31 peut être constituée d'une tôle d'acier de préférence galvanisée dans laquelle deux évidements borgnes rectilignes allongés coaxiaux et alignés 32 sont pratiqués radialement à partir de deux côtés diamétralement opposés de l'armature pour recevoir les extrémités internes des tourillons 8.

Les tourillons 8 sont pris en chape dans le disque obturateur 16 entre les deux couches de matériau réfractaire 30 qui sont maintenues serrées l'une contre l'autre par l'intermédiaire de boulons de fixation 33 dont les têtes d'extrémité prennent appui sur des plaquettes externes de répartition de pression 34, les boulons 33 traversant les tourillons 8 et le disque obturateur 16 de part en part.

L'armature intermédiaire 31 est percée en outre d'une pluralité de trous ronds 35 de préférence uniformément répartis suivant un pas déterminé le long d'au moins une circonférence concentrique de l'armature et éventuellement d'un trou central 37 pour permettre le passage d'agrafes ou crampons en forme de U (non représentés) pour l'assemblage des deux couches en matériau réfractaire 30 avec la plaque intermédiaire 31 respectivement à partir des deux faces externes opposées de l'obturateur.

L'armature 31 comporte en outre des lumières rectangulaires ou oblongues 36 avantageusement régulièrement réparties le long de plusieurs circonférences concentriques de l'armature sur la majeure partie de la surface de celle-ci, comme cela est clairement montré sur la figure 10.

La répartition, les positions relatives et les orientations et dimensions individuelles des lumières 36 sont déterminées de manière à obtenir une déformation thermique directionnelle contrôlée de l'armature 31 permettant d'obtenir la suppression des débits de fuite d'air ou de gaz chaud lors d'un incendie dans une gaine par l'amélioration de l'étanchéité périphérique de contact de l'obturateur en position fermée avec la gaine.

En l'absence de telles perforations, la dissipation de chaleur par transfert thermique serait aléatoire et désordonnée, provoquant notamment un gauchissement ou un gaufrage ondulatoire de l'armature.

On remarque sur la figure 10 que la longueur des lumières rectangulaires 36 diminue en se rapprochant du centre de l'armature.

La répartition et les dimensions individuelles particulières des lumières 36 sur la surface de l'armature 31 ne pouvant être décrites simplement, leur configuration telle que représentée sur la figure 10 fait partie intégrante de la présente invention.

On peut prévoir par exemple que les trous ronds 35 précités soient espacés d'un angle θ sensiblement égal à 60°.

Les deux couches externes 30 sont fixées à l'armature interne 31 en outre par une liaison adhérente auxiliaire au moyen d'une colle à base de produit réfractaire remplissant les trous 35 et 37 et les lumières 36. Ces couches de matière réfractaire ne subissent pratiquement pas de dilatation thermique car leur coefficient de dilatation est négligeable.

A titre d'exemple, les matières réfractaires de l'obturateur devront résister à des températures de 750°C à 1400°C selon la norme internationale I.S.O. 834.

Ci-après est décrit le mécanisme de commande de l'obturateur 16 en référence aux figures 5, 6 et 14.

L'extrémité extérieurement saillante 8b du tourillon 8 actionné en rotation est recouverte par le cache de protection 7 et solidaire d'un premier bras radial 38 qui s'étend perpendiculairement à l'axe du tourillon 8, lequel premier bras 38 est relié de manière articulée à une extrémité d'un second bras 39 par l'intermédiaire d'une biellette 40.

Le second bras 39 est relié par son autre extrémité à un axe pivotant 41 qui traverse la platine 13b du boîtier de commande 13 précité en étant monté tournant dans celle-ci par une extrémité. Cette platine est boulonnée à une console longitudinale 13c soudée à la face latérale externe de l'élément tubulaire 15.

La longueur de la biellette 40 entre les axes d'articulation étant égale à la distance séparant l'axe pivotant 41 de l'axe du tourillon 8, l'ensemble des bras 38 et 39 et de la biellette 40 forme sensiblement les trois côtés mobiles d'un parallélogramme articulé.

Un ressort hélicoïdal 42 de rappel en position fermée de l'obturateur est monté coaxialement autour de l'axe 41 dans le boîtier de commande 13, ses deux spires extrêmes opposées prenant appui ou étant accrochées par leur extrémité respectivement sur le boîtier et à un levier d'actionnement 43 solidaire de l'extrémité libre de l'axe 41 à l'intérieur du boîtier de commande 13.

Le levier 43 est coudé en U à son extrémité libre pour loger, entre les deux branches du U, un ressort hélicoïdal de compression 44 qui sollicite élastiquement une lame allongée 45 en application contre le levier. Cette lame a une extrémité coudée en équerre formant une patte transversale traversant un orifice conjugué transversal dans le levier 43 avec un jeu permettant le débattement de la lame pour s'écarter ou se rapprocher du levier. Cette lame 45 ainsi articulée traverse, par sa partie extérieure opposée, un orifice rectangulaire de la paroi transversale du U, lequel orifice est orienté et dimensionné de façon à permettre ce débattement. Cette lame allongée 45 dépasse du levier 43 en s'étendant au-delà de l'extrémité recourbée du levier 43.

Sur la figure 5 on a représenté un déclencheur thermique particulier 46 constitué d'une tige axialement coulissante 47 dont une extrémité fait saillie à l'intérieur de l'élément tubulaire long 15 et dont l'autre extrémité dépasse dans le boîtier de commande 13 en traversant la platine 13b.

La tige 47 coulisse dans la patte transversale 48a dans un support de guidage 48 fixé à la platine 13b et traversant la paroi latérale de l'élément tubulaire 15. L'extrémité intérieure libre du support 48 est coudée en équerre en formant ladite patte transversale. Un ressort hélicoïdal de compression de rappel 49 entoure la portion de tige 47 dépassant de la patte 48a vers l'intérieur en prenant appui par ses extrémités opposées respectivement sur un collet (formé par exemple par un anneau d'arrêt fendu tel qu'un circlips) de la tige 47 et sur la face correspondante de la patte 48a. Un fil métallique en alliage à mémoire de forme connue en soi 50 est enroulé hélicoïdalement autour de la tige 47 entre l'autre face de la patte 48a et un collet intermédiaire 47b (tel qu'un circlips) de ladite tige.

Le déclencheur thermique 46 est ainsi susceptible d'être exposé à un incendie, de sorte qu'une élévation de température provoquera la dilatation donc l'allongement du fil hélicoïdal 50 qui repoussera, vers la gauche sur la figure 5, la tige 47 en surmontant la force antagoniste du ressort de rappel 49. Lorsque l'échauffement de l'alliage 50 cessera, celui-ci se raccourcira en se refroidissant et le ressort de rappel 49 assurera le retour de la tige 47 vers sa position de droite sur la figure 5.

L'extrémité libre de la tige 47 qui se trouve à l'intérieur du boîtier de commande 13 est pourvue de deux collets parallèles axialement espacés 51 entre lesquels est monté avec jeu une languette transversale 68 de libération du levier d'actionnement 43, traversée avec jeu par ladite tige en permettant à ladite languette 68 un débattement angulaire parallèlement à la direction longitudinale de la tige.

En se reportant maintenant plus particulièrement à la figure 6, on voit que l'extrémité libre de la lame 45 est retenue dans une encoche 52a en forme de U, laquelle encoche est formée dans une plaquette 52 basculante par rapport à un axe traversant 53 de sorte que le levier est ainsi retenu dans la position ouverte de l'obturateur 16, c'est-à-dire à gauche sur la figure 6, dans le cas du clapet utilisé en coupe-feu.

La figure 6 représente le boîtier de commande 13 sans son couvercle de fermeture 13a.

Lorsque la plaquette 52 bascule sur l'axe 53, l'encoche 52a associée s'efface et libère la lame 45 donc le levier d'actionnement 43 qui est entraîné en rotation autour de l'axe 41 vers la droite sur la figure 6 sous l'action du ressort de rappel 42, ce qui provoque le déplacement rotatif simultané de l'obturateur 16 en position fermée.

Bien entendu, si le clapet 1 est utilisé en tant que clapet de désenfumage, la position du levier 43 à gauche sur la figure 6 correspond à la position de fermeture de l'obturateur 16 et ce levier, lors de son déblocage, sera rappelé par son ressort 42 vers sa position d'ouverture à droite sur la figure 6.

La plaquette 52 supporte la base d'un solénoïde formant bobine d'électro-aimant 54 qui est magnétiquement attirée contre un disque formant armature relativement fixe 55 solidaire par boulonnage d'une deuxième plaquette 56 également articulée sur l'axe 53, de sorte que les deux plaquettes 52 et 56 sont ainsi solidarisées par l'ensemble de la bobine 54 et de son armature 55.

L'ensemble des plaquettes 52 et 56 est supporté par une plaque de support 57 solidaire de la platine 13b perpendiculairement à celle-ci par l'intermédiaire de l'axe 53.

La languette de libération précitée 68 qui est retenue par les collets 51 de la tige 47, retient de manière escamotable la deuxième plaquette 56 dans une position où la lame 45 est retenue par l'encoche 52a de la première plaquette 52. A cet effet, l'extrémité libre de la languette 68 traverse avec jeu une fente 57a (figure 14) de la plaque de support 57 en dépassant de celle-ci jusque sous le bord inférieur de la plaquette 56 pour retenir celle-ci dans la position de blocage de la lame 45. A la face supérieure de la languette 68 est fixé un crochet 68a (figures 5 et 14) par lequel la languette est suspendue au bord supérieur de la plaque de support 57 avec un jeu permettant au crochet de pivoter autour dudit bord supérieur pour s'écarter angulairement de la plaque de support 57. Lorsque la tige 47 du déclencheur thermique 46 repousse l'extrémité correspondante de la languette 68 vers le haut, cette languette, grâce au basculement concomitant de son crochet 68a autour de l'arête supérieure de la plaque de support 57 et grâce aux jeux de la languette respectivement dans la fente 57a et entre les deux collets 57 sur la tige 47, prendra une position inclinée, de sorte que son extrémité libre précitée se retirera de dessous du bord inférieur de la plaquette 56 tout en restant engagée dans la fente 57a. La plaquette 56 étant ainsi libérée, l'ensemble solidaire des plaquettes 52 et 56 basculera vers le bas par effet de pesanteur en escamotant ainsi le cran d'arrêt 52a pour libérer le levier 43.

Le déclenchement du levier 43 peut aussi être provoqué par excitation ou désexcitation de la bobine d'électro-aimant 54 produisant une force de répulsion ou une cessation d'attraction magnétique entre bobine 54 et armature 55 donc une séparation entre bobine et armature, de sorte que la plaquette 52 ainsi désolidarisée de la plaquette 56, basculera vers le bas sur l'axe 53 tandis que la plaquette 56 restera retenue en position haute par la languette 68.

On a également représenté sur la figure 6 un organe de déclenchement manuel accessible de l'extérieur 58 et à ressort de rappel 58a, formant tirette en Z dont l'une des extrémités coudées est apte à soulever l'extrémité libre de la lame 45 à l'encontre de la force de compression du ressort 44 afin de dégager la lame 45 de l'encoche précitée 52a pour libérer le levier 43.

Le boîtier 13 comporte en outre un moteur électrique de réenclenchement 59 dont l'arbre moteur 59a est apte à faire pivoter un bras de réenclenchement 59b permettant de ramener le levier d'actionnement 43 de la droite vers la gauche, lorsque le mécanisme a été préalablement déclenché à cause d'un incendie par exemple.

Bien entendu, le moteur électrique 59 peut être remplacé par un vérin à fluide comprimé, un système à crémaillère et pignon ou bien encore un système à bielle-manivelle.

Il est prévu un contact 60 de position de fin de course angulaire du levier 43 vers la droite sur la figure 6. Le boîtier de commande 13 comporte également un contact de position de fin de course angulaire en sens opposé, c'est-à-dire vers la gauche qui n'est pas visible sur cette figure. Ces contacts produisent respectivement un signal par exemple lumineux par allumage d'une lampetémoin indiquant à distance, la position relative de l'obturateur et/ou provoquant l'arrêt du moteur électrique 59.

On a indiqué en 61 des douilles traversantes d'entrée de câbles électriques destinés à être reliés à un bornier de raccordement 62 qui est raccordé électriquement à la bobine 54 à impulsions ou à ruptures, au moteur électrique de réenclenchement 59 et aux contacts de fin de course angulaire 60.

Le boîtier 13 est donc équipé ici d'un double système de déclenchement du levier 43, à savoir le déclencheur thermique 46 actionné par la dilatation de la pièce 50 et le déclencheur électromagnétique 54 actionné par la séparation de la bobine 54 de l'armature 55.

Le déclencheur à électro-aimant permet un déclenchement télécommandé du levier 43, à partir par exemple d'un capteur de température.

Lorsque le déclencheur thermique 46 est utilisé, l'ensemble des plaquettes 52 et 56 bascule sur l'axe 53 car la bobine 54 reste attachée à l'armature 55.

On pourrait également à la place de la pièce en alliage à mémoire de forme notamment monocristalline 50 utiliser un déclencheur thermique à fusible en alliage eutectique à base notamment de cuivre et d'étain, dont la fusion provoque l'action de déclenchement.

Le déclencheur thermique assure ainsi un déclenchement automatique du levier 43 lorsque la température dépasse une valeur prédéterminée.

On a indiqué en 63 le trou de passage du déclencheur thermique 46 à travers l'élément tubulaire le plus long 15 (voir figure 7).

Les figures 11 à 13 illustrent les diverses fonctions possibles du clapet conforme à l'invention.

On a indiqué de manière schématique et fonctionnelle sur les figures 11A et 11B le fonctionnement du clapet 1 de l'invention dans son utilisation comme coupe-feu.

En position normale de fonctionnement, telle qu'illustrée sur la figure 11A, l'obturateur 16 est en position d'ouverture maximale permettant l'écoulement de l'air suivant la flèche F ; le levier de déclenchement 43 est à la fois soumis à une force de rappel vers sa position de fermeture par le ressort 42, et retenu en position d'ouverture par le déclencheur 46 ou 54, 56.

Lorsque le déclencheur 46 ou 54, 56 est actionné, le levier d'actionnement 43 est libéré et l'obturateur est ramené en appui contre les joints aérauliques 29 par le ressort de rappel 42, comme cela est illustré sur la figure 11B.

La figure 12 représente une variante de réalisation du clapet 1 de l'invention, dans laquelle l'obturateur 16 est sélectivement réglable dans une position d'ouverture partielle fixe, de manière à assurer un coefficient de perte de charge constant déterminé dans une gaine donnée.

Ce réglage sélectif de la position de l'obturateur 16 s'obtient en modifiant la position angulaire relative de l'obturateur 16 par rapport au levier 43 qui reste dans sa position initiale.

La figure 13 représente encore une autre variante de réalisation du clapet 1, dans laquelle la position de l'obturateur 16 est infiniment variable et automatiquement réglée en fonction de certaines conditions ambiantes, telles que la température ou le débit d'air, par un dispositif d'asservissement motorisé 64.

Dans ce cas, le clapet 1 est équipé d'une sonde 65 pour mesurer par exemple la pression dynamique du fluide en amont de l'obturateur dans la gaine, ladite sonde émettant un signal électrique ou pneumatique correspondant vers un système régulateur électrique ou pneumatique de débit 66 commandant en réponse un organe de réglage (moteur électrique ou vérin pneumatique) 64 faisant varier la position angulaire de l'obturateur 16.

La fonction illustrée par les figures 11A et 11B est combinable soit avec la fonction illustrée par la figure 12 ou avec la fonction illustrée par la figure 13.

Lorsque le déclencheur thermique 46 est actionné, il excite un relais électrique ou pneumatique de coupure 67 qui a pour fonction de débrayer le moteur 64 en libèrant ainsi l'obturateur 16 qui est ramené à sa position de fermeture par un ressort de rappel.

Bien entendu, le fonctionnement du déclencheur thermique 46 et du déclencheur à électro-aimant 54 est prioritaire sur le réglage sélectif ou automatique de la position d'ouverture partielle de l'obturateur 16.

La présente invention a notamment pour avantage de prévoir un unique type de clapet multifonctions pouvant assurer à la fois les fonctions de coupe-feu ou de désenfumage et les fonctions de réglage sélectif ou automatique d'ouverture partielle de l'obturateur.

Bien que la présente invention ait été décrite en liaison avec plusieurs modes de réalisation particuliers, il est évident que l'invention comprend tous les équivalents techniques des moyens décrits et leurs combinaisons si ceux-ci entrent dans le cadre des revendications qui suivent.

## Revendications

1. Obturateur de clapet (16) constitué de deux couches de matériau réfractaire (30) séparées par une plaque plane intermédiaire de renfort formant âme métallique (31) sur laquelle sont montés en chape deux tourillons coaxialement alignés d'extrémité (8) de pivotement de l'obturateur, caractérisé en ce que la plaque intermédiaire (31) est percée de lumières rectangulaires ou oblongues (36) réparties, de préférence régulièrement, le long de plusieurs circonférences concentriques de façon que le rapport de surface pleine et vide reste constant sur toute la surface de l'obturateur, quelle que soit la taille et d'une circonférence à l'autre.

2. Obturateur selon la revendication 1, caractérisé en ce que l'orientation, la répartition, et les positions relatives et les dimensions individuelles des lumières sont conformes à la figure 10.

3. Obturateur selon la revendication 1 ou 2, caractérisé en ce que la plaque intermédiaire (31) est percée en outre de plusieurs trous (35) espacés de préférence uniformément pour le passage d'agrafes servant à assembler les deux couches en matériau réfractaire (30) avec la plaque intermédiaire (31), les trous (35) et les lumières (36) précités étant noyés dans une colle à base de produits réfractaires.

4. Clapet (1) muni d'un obturateur (16), caractérisé en ce que le corps du clapet est constitué de deux éléments tubulaires (14, 15) coaxialement alignés, séparés par un écartement prédéterminé (E), les extrémités proximales de ces éléments étant reliées extérieurement en recouvrement partiel par une ceinture de raccordement (11) qui comporte, au voisinage de chacune de ses deux extrémités opposées, une nervure creuse périphérique (17) percée d'une pluralité d'ouvertures (18) régulièrement espacées chaque nervure faisant saillie vers l'intérieur de la ceinture et venant en contact avec l'extrémité proximale de l'un des deux éléments tubulaires précités, une garniture en matière thermiquement isolante et de préférence réfractaire (22) venant remplir l'espace intercalaire périphérique délimité entre, d'une part, les deux nervures (17) et, d'autre part, la face interne de la ceinture de raccordement (11) et les extrémités proximales des deux éléments tubulaires (14, 15).

5. Clapet selon la revendication 4, caractérisé en ce qu'au moins une rangée périphérique de perforations de préférence identiques régulièrement espacées (19) est prévue sensiblement au centre de la ceinture de raccordement (11) et au droit de la garniture précitée (22).

6. Clapet selon la revendication 4 ou 5, caractérisé en ce qu'une rangée au moins de perforations régulièrement espacées (25) est pratiquée péripnériquement au voisinage de l'extrémité proximale de l'un (15) des deux éléments tubulaires et au droit de la garniture précitée (22).

7. Clapet selon la revendication 6, caractérisé en ce qu'un joint annulaire en matériau thermiquement isolant et intumescent (27) recouvre intérieurement la ou les rangées de perforations (25) de l'élément tubulaire associé (15).

8. Clapet selon l'une des revendications 5 à 7, caractérisé en ce que les perforations précitées (19, 25) sont pratiquées suivant plusieurs rangées parallèles axialement espacées par exemple uniformément, les perforations étant décalées de façon alternée d'une rangée à l'autre.

9. Clapet coupe-feu ou de désenfumage à fonction de compartimentage par obturateur à action par tout ou rien, caractérisé en ce qu'il est combinable avec le maintien de l'obturateur dans une position d'ouverture partielle fixe ou variable par régulation automatique pour assurer un coefficient de perte de charge constant au moins actuellement pour une situation locale donnée.

10. Clapet selon la revendication 9, caractérisé en ce que l'obturateur précité (16) est solidaire en rotation d'un levier d'actionnement (43) qui est soumis à une force de rappel élastique (42) vers la position d'ouverture maximale ou de fermeture de l'obturateur, et qui est retenu en position de fonctionnement normale par une butée d'arrêt (52a) escamotable sous l'action d'un déclencheur (46), la position angulaire relative de l'obturateur par rapport au levier d'actionnement qui reste retenu dans sa butée d'arrêt étant variable par réglage sélectif pour déplacer l'obturateur vers une position d'ouverture partielle déterminée.

11. Clapet selon la revendications 9, caractérisé en ce que l'obturateur précité (16) est soumis à une force de rappel élastique (42) vers sa position d'ouverture maximale ou de fermeture et entraîné en rotation vers une position d'ouverture variable par un moteur (64) qui est débrayable sous l'action d'un déclencheur (46) et qui est actionné automatiquement par un régulateur de débit (66) en fonction du débit de fluide mesuré par un capteur (65) dans le clapet.

12. Clapet selon l'une quelconque des revendications 9 à 11, caractérisé en ce que son corps est conforme au clapet selon l'une des revendications 4 à 8.

13. Clapet selon l'une quelconque des revendications 4 à 11, caractérisé en ce qu'il comporte un obturateur conforme à l'une des revendications 1 à 3.

14. Système d'un cadre (2) à sceller dans une ouverture de traversée de paroi (P) et d'un clapet (1) muni d'un obturateur (16) à monter dans ledit cadre, caractérisé en ce que le cadre (2) est pourvu d'une partie radialement saillante vers l'extérieur et périphérique (4, 4a) servant à positionner le cadre dans et par rapport à la paroi (P) et, sur sa face latérale externe, d'une pluralité de pattes de scellement (9), en ce que la face latérale interne du cadre est espacée de la face latérale externe du clapet par un intervalle annulaire (I) destiné à être rempli d'un liant en matériau réfractaire (12) et de préférence thermiquement isolant et en ce que le clapet assure la fonction de compartimentage à effet coupe-feu et de désenfumage.

15. Système selon la revendication 13, caractérisé en ce que la partie radialement saillante précitée est une collerette d'extrémité (4) servant de butée d'arrêt et d'appui sur une face de la paroi et/ou une moulure (4a) au voisinage d'une extrémité et destinée à être noyée dans la paroi.

16. Système selon la revendication 14 ou 15, caractérisé en ce que deux capots (5, 6) font saillie de la paroi latérale externe du cadre à partir de deux côtés opposés de celui-ci, pour recouvrir d'une part un bout (8a) d'arbre de pivotement (8) extérieurement saillant de l'obturateur (16) du clapet (1) et, d'autre part, un mécanisme de commande (38, 39, 40) relié extérieurement à l'autre bout (8b) d'arbre de pivotement (8) de l'obturateur.

17. Système selon les revendications 15 et 16, caractérisé en ce que dans le cas de la moulure, au moins un capot précité est pourvu d'une patte d'extrémité (4b) radialement saillante vers l'extérieur et servant de butée d'arrêt et d'appui sur une face de la paroi.

18. Système selon l'une des revendications 14 à 17, caractérisé en ce que les pattes de scellement (9) sont sensiblement tangentes au moins initialement à la face externe du cadre (2) et en forme de fourche dont les branches (9a) sont bifurcables dans des sens opposés.

19. Système selon l'une quelconque des revendications 14 à 18, caractérisé en ce que le clapet est conforme à l'une quelconque des revendications 4 à 13.
